# EUROPEAN PATENT APPLICATION

(11) **EP 2 081 352 A1**
(43) Date of publication of application: **22.07.2009**
(21) Application number: 08001071.3
(22) Date of filing: 21.01.2008
(51) Int. Cl.: H04L 29/06, H04W 4/00

(54) **Method for network controlled MobileIP-based flow management**

(71) Applicant: Nokia Siemens Networks Oy, 02610 Espoo (FI)
(72) Inventor: Görg, Carmelita, Prof., 28357 Bremen (DE); Pangboonyanon, Varaporn, 28195 Bremen (DE); Pittmann, Frank, 12099 Berlin (DE); Toseef, Umar, 28201 Bremen (DE); Udugama, Asanga, 28357 Bremen (DE)
(74) Representative: Bruglachner, Thomas E.

(57) **Abstract**

A method for flow management in a data packet network with a mobile node (MN) comprises the steps of sending an improved Binding Update (BU) message to an improved home agent (HA) by a FMEF (Flow Management Enforcement Function) entity, and deriving flow filters from the at least one flow management instruction by the improved HA. The improved BU message comprises at least one flow management instruction. The MN comprises at least one network interface.

## Description

This application relates to an improved data packet network.

Internet Protocol (IP) addressing and routing techniques enables communication of data packets among networks. Several known documents supporting mobility of user equipments in the work are described below.

The Internet Protocol (IP) is a protocol used for communicating data across a packet-switched network. An Internet Protocol version 6 is shown in
S. Deering and R. Hinden, "Internet Protocol, Version 6 (IPv6) Specification", RFC 2460, December 1998, http://www.ietf.org/rfc/rfc2460.txt,
herewith called document D0.

A protocol, which allows a mobile node to remain reachable while moving around in the Internet Protocol version 6 (IPv6) is shown in
D. Johnson, C. Perkins, and J. Arkko, Mobility Support in IPv6, RFC 3775, June 2004, http://www.ietf.org/rfc/rfc3775.txt,
herewith called document D1. The mobile node is associated with a home address. When the mobile node is located away from its home network, the node is associated with a care-of address, which provides information about the node's current location. The care-of address is associated with the home address by a router - known as Home Agent - on the home network. The association of the home address to the care of address is known as binding. The protocol allows one flow of data packets to be associated with one care of address.

The care of address can be associated with one or more flows of data packets with extensions to the IPv6 (Internet Protocol version 6). These extensions are disclosed in
H. Soliman, N. Montavont, N. Fikouras, and K. Kuladinithi, "Flow Bindings in Mobile IPv6", draft-soliman-monami6-flow-binding-00.txt, February 2007, http://tools.ietf.org/id/draft-soliman-monami6-flow-binding-04.txt,
herewith called document D2. The IPv6 extensions allows a node or router to bind a particular flow to a care of address without affecting other flows using the same home address. A flow has one or more connections, which are associated with a flow identifier. The connection is usually has a source address and a destination address, together with a transport protocol number, and a source port and a destination port numbers.

The binding of flow benefits a node or router that has more than one address. The node or router may have more than one interface. A certain flow is directed to certain address to take advantage of properties associated with the interface.

Multiple care-of addresses can be bound to a single Home Address with IPv6 extensions that are disclosed in
R. Wakikawa, T. Ernst, K. Nagami, and V. Devarapalli, "Multiple Care-of Addresses Registration", draft-ietf-monami6-multiplecoa-02.txt, March 2007, http://tools.ietf.org/html/draft-ietf-monami6-multiplecoa-02,
herewith called document D3. A new identification number is assigned in each binding for a receiver, such as a node or a router, to differentiate bindings corresponding to a same Home address. The extensions enables a mobile node to access the Internet through multiple access media simultaneously.

A framework for an evolution or migration of the 3GPP (3rd Generation Partnership Project) system to a high-data-rate, low-latency, and packet-optimized system that supports multiple radio access technologies (RATs) is disclosed in
3GPP TR 23.882, "3GPP system architecture evolution", http://www.3gpp.org/ftp/Specs/html-info/23882.htm,
herewith called document D4. The framework focuses on the packet switched domain to cope with growth in Internet Protocol data traffic.

An Internet Protocol connectivity using non-3GPP accesses to the Evolved 3GPP Packet Switched domain is shown in
3GPP TS 23.402, "Architecture Enhancements for non-3GPP accesses",
http://www.3gpp.org/ftp/Specs/html-info/23402.htm,
herewith called document D5.

A system description for an inter-working between 3GPP systems and Wireless Local Area Networks (WLANs) is disclosed in
3GPP TS 23.234, "3GPP system to Wireless Local Area Network (WLAN) inter-working", http://www.3gpp.org/ftp/Specs/html-info/23234.htm,
herewith called document D6. This system description is also valid for other Internet Protocol based access networks that support the same capabilities towards the inter-working system.

A simple query and response protocol that can be used to exchange policy information between a policy server, such as Policy Decision Point (PDP) and its clients, such as Policy Enforcement Points (PEPs) is shown in
J. Boyle, R. Cohen, S. Herzog, R. Rajan, and A. Sastry, "The COPS (Common Open Policy Service) Protocol", January 2000, http://tools.ietf.org/html/rfc2748,
herewith called document D7. The basic model of interaction between the policy server and its clients is compatible with the document D7 for policy based admission control.

A protocol for carrying authentication, authorization, and configuration information between a Network Access Server, which desires to authenticate its links and a shared Authentication Server is shown in
C. Rigney, S. Willens, A. Rubens, and W. Simpson, June 2000, "Remote Authentication Dial In User Service (RADIUS)", http://tools.ietf.org/html/rfc2865,
herewith called document D8.

A filtering rule as a means for multi-homed node to perform per flow interface selection is shown in
C. Larsson, H. Levkowetz, H. Mahkonen, T. Kauppin, October 2006, "A Filter Rule Mechanism for Multi-access Mobile Ipv6", http://tools.ietf.org/wg/monami6/draft-mitsuya-monami6-flow-distribution-policy-04.txt,
herewith called document D9.

The application provides a method for flow management in a data packet network with a mobile node (MN). The MN comprises at least one network interface. The method comprises the steps of sending an improved Binding Update (BU) message to an improved home agent (HA) by a FMEF (Flow Management Enforcement Function) entity, and deriving flow filters from the at least one flow management instruction by the improved HA. The improved BU message comprises at least one flow management instruction.

It is believed that a network has the advantage of privy to information related to network load and a user equipment (UE) that is connected to the network. The information can identify area of network congestion and the network can direct flows in a manner wherein the congestion is reduced.

The network is also aware of the characteristics of the different network interface devices of the UE. Furthermore, it has also information related to uplink as well as the downlink situation in the last mile to the network interface devices. This can help the network to determine which kind of flows should be associated with which network interfaces.

The network is usually able to make faster and reliable flow management decisions rather than the UE. The network need not depend on using filters that are derived from UE based bindings.

The improved BU message may comprise a F flag field. A content of the F flag field indicates that the improved BU message comprises the at least one flow management instruction.

The method may comprise the further step of sending an improved BU message to the improved HA by the MN. The improved BU message is intended to register the attachment of the MN and the least one network interface to the data packet network. The improved BU message comprises a modified Binding Unique Identifier sub-option, which comprises an Access Technology Type (ATT) Identifier (ID) field.

Furthermore, the method can also include the step of updating a binding cache of the improved HA by the improved HA. The update reflects a content of the ATT ID field in a corresponding care of address.

The method may comprise the further step of sending an improved Binding Acknowledgement (BA) message to the MN by the improved HA.

Moreover, the method may also comprise the step of sending an improved BA message to the FMEF by the improved HA. The improved BA message is to inform the FMEF about the registration of the MN and the at least one network interface. The improved BA message comprises a 'F' flag field and a modified Binding Unique Identifier sub-option with an ATT ID field. A content of the F flag field indicates that the improved BA message comprises the modified Binding Unique Identifier sub-option.

The method can also include the further step of replying with an improved BA message to acknowledge an application status of the flow management instruction setting action by the improved HA. The application status is shown in a status field of the improved BA message. The improved BA message comprises the 'F' flag field that is set and the modified Binding Unique Identifier sub-option. A content of the F flag field indicates that the improved BA message comprises the modified Binding Unique Identifier sub-option.

A first data packet network with mobile nodes (MN) is provided comprising a FMEF (Flow Management Enforcement Function) entity. The mobile nodes are attached to the data packet network. The MN comprises at least one network interface. The FMEF entity is connected to an improved home agent (HA) by a communication link. The tasks performed by the FMEF entity comprises obtaining at least one flow management decision from a flow decision maker, identifying flows to be associated with current binding based on the at least one flow management decision, and informing the improved HA regarding at least one flow management instruction.

An improved Binding Update (BU) message from the FMEF to the improved HA may comprise the at least one flow management instruction. The task performed by the FMEF entity may comprise waiting for an improved Binding Acknowledgement (BA) message, which indicates an establishment of a binding or of a deregistration of the binding of the MN at the improved HA. The task performed by the FMEF entity may further comprise updating a binding cache with new binding. The task performed by the FMEF entity may further comprise sending a binding-information to the flow decision maker. The task performed by the FMEF entity may further comprise waiting for an improved BA message.

A second data packet network with mobile nodes (MN) is provided comprising an improved home agent (HA). The mobile nodes are attached to the data packet network. The MN comprises at least one network interface. The improved HA is connected to a FMEF (Flow Management Enforcement Function) entity by a communication link. The tasks performed by the improved HA comprises receiving an improved Binding Update (BU) message from the FMEF entity, which carries at least one flow management instruction, and deriving at least one flow filtering rule from the at least one flow management instruction.

The task performed by the improved HA may comprise receiving an improved BU message from the MN to register an attachment of the MN to the data packet network and may comprise sending an improved BA (Binding Acknowledgement) message to the MN to acknowledge receipt of the improved BU message. The task can also comprise sending an improved BA message to the FMEF entity, to inform the FMEF entity of the attachment of the MN and the network interface to the data packet network. The task may also comprise sending an improved BA message to indicate a success status or a failure status of the setting of the at least one flow filtering rule. The task may further comprise sending an improved BA message to the FMEF entity. The MN may communicate with the improved HA through an interface if the improved HA is hosted by a GW (gateway). The GW can comprise a PDN (packet data network) gateway and the interface comprises an interface S2.

A third data packet network with mobile nodes (MNs) is provided comprising a GW (gateway). The mobile nodes are attached to the data packet network whilst the MN comprises at least one network interface, the data packet network. The GW comprises a FMEF (Flow Management Enforcement Function) entity and an improved home agent (HA). The FMEF entity is connected to the improved HA by a communication link. The tasks performed by the FMEF entity comprises obtaining at least one flow management decision from a flow decision maker, identifying flows to be associated with current binding based on the at least one flow management decision, and informing the improved HA regarding at least one flow management instruction.

The GW can comprise a PDN (packet data network) GW, which is in communication link with the MN through an interface S2. The GW can also be in communication link with the flow decision maker. The GW may derive at least one flow filter rule from at least one flow management rule, which is received from the flow decision maker.

The GW can be in the form of a serving GW, an ePDG (Evolved Packet Data gateway), an Internet GW, an enhanced GW, the PDN gateway, or the serving GW that is integrated with the PDN gateway.
- FIG. 1: illustrates schematic diagram of an improved IETF (Internet Engineering Task Force) based network 20 with a flow-management enforcement function (FMEF) entity 21 that supports Monami6 (mobile nodes with multiple interfaces in IPv6),

- FIG. 2: illustrates a first improved 3GPP-based network with an attachment at an UMTS access,
- FIG. 3: illustrates a second improved 3GPP-based network with an attachment at an UMTS access,
- FIG. 4: illustrates a third improved 3GPP-based network with an attachment at an UMTS access,
- FIG. 5: illustrates the improved 3GPP-based network of FIG. 2 with parallel attachments at the UMTS access and a WLAN access,
- FIG. 6: illustrates a message flow of a flow management (FM) initiated by an user-equipment (UE) in the improved 3GPP-based network of FIG. 2,
- FIG. 7: illustrates a message flow of a flow management (FM) for parallel attachments that is initiated by the user-equipment (UE) in the improved 3GPP-based network of FIG. 3,
- FIG. 8: illustrates a message flow for expiry of a binding at an improved home agent (HA) in the improved 3GPP-based network of FIG. 2 or 3,
- FIG. 9: illustrates a format of an FMBU message,
- FIG. 10: illustrates a format of an FMBA message,
- FIG. 11: illustrates a modified Binding Unique Identifier sub-option, and
- FIG. 12: illustrates a table of ATT ID codes.

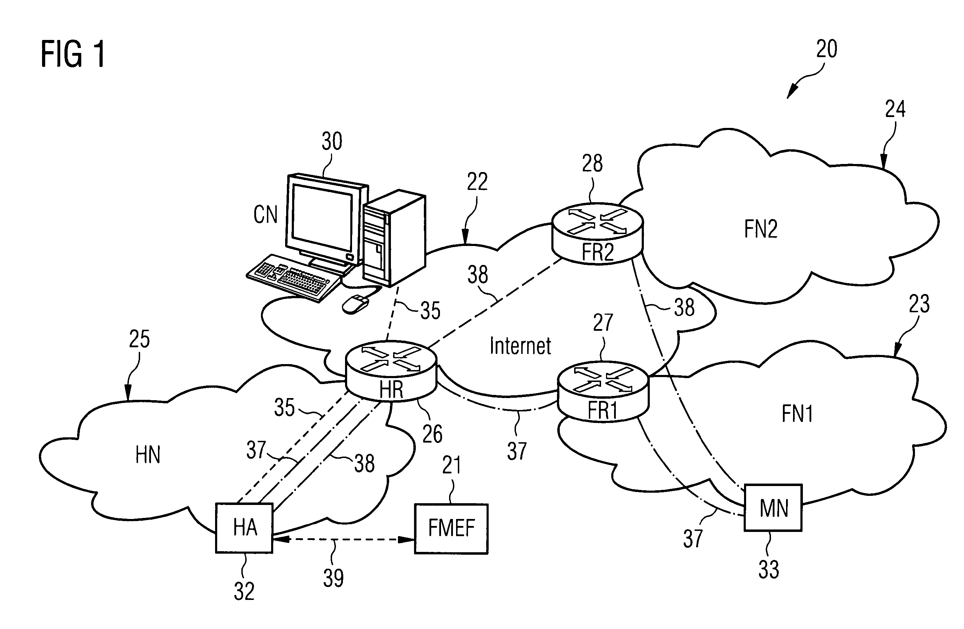

FIG. 1 shows schematic diagram of an improved IETF (Internet Engineering Task Force) based network 20 with a flow-management enforcement function (FMEF) entity 21 that supports Monami6 (mobile nodes with multiple interfaces in IPv6).

The improved IETF network 20 includes the Internet 22, which is connected to foreign networks (FN1)23 and (FN2) 24, and a home network (HN) 25. The Internet 22 is connected to the home network (HN) 25 via a home router (HR) 26 whilst the foreign networks (FN1) 23 and (FN2) 24 are connected to the Internet 22 by the foreign routers (FR1) 27 and (FR2) 28 respectively.

A correspondent node (CN) 30 is connected to the Internet 22. The home network (HN) 25 includes an improved home agent (HA) 32 that is connected to the home router (HR) 26 and to the FMEF entity 21. A mobile node (MN) 33 is connected to both the foreign network (FN1) 23 and the foreign network (FN2) 24.

A combine flow 35 of data packets is transmitted between the correspondent node (CN) 30 and the improved home agent (HA) 32 via the home router (HR) 26.

In a downlink transfer in which the transfer of data packets is from the CN 30 to the MN 33, the HA 32 picks up the combine flow 35 from the CN 30 and distributes the combine flow 35 into a first flow 37 and a second flow 36.

Similarly, in an uplink transfer, wherein the transfer of data packets is from the MN 33 to the CN 30, the HA 32 receives the first and second flows 37 and 36 from the MN 33 and combines the first and second flow 37 and 36 to form the combine flow 35.

The HA 32 sends the first flow 37 and the second flow 36 to the MN 33 via different paths.

The first flow 37 is sent between the HA 32 and a first interface of the MN 33 via the HR 26 and the FR1 27. In contrast, the second flow 38 is transmitted between the HA 32 and a second interface of the MN 33 via the HR 26 and the FR2 28.

A flow management signalling 39 is provided between the HA 32 and the FMEF 21.

The Internet 22 supports Internet Protocol version 6 (IPv6) and Mobile IP (MIP), wherein the MIP supports movement of the MN 33 away from the HN 25. The IPv6 is described in document D0 whilst the MIP is shown in document D1. Data packets are transmitted through the Internet 22

The CN 30 transmits and receives data packets to and from the MN 33.

The MN 33, as provided here, is attached to the FN1 23 and the FN2 24. The MN 33 registers these attachments with the HA 32.

The improved HA 32 supports mobile nodes with multiple interfaces in IPv6 environment (Monami6). The HA 32 regularly updates the FMEF entity 21 with attachment information and receives flow management instructions from the FMEF entity 21. The flow management instructions filter specifies a flow for binding with care of address of an interface, thereby binding the flow to an interface. This is for distributing traffic among multiple paths.

The HA 32 receives and transmits data packets with the MN 33 via a software tunnel to provide an effective of data transfer. The HA 32 encapsulates the data packets with a care of address of the MN 33 and route information, and sends them to the MN 33. The MN 33 receives the transmitted data packets and decapsulates the transmitted data packets. In like manner, the MN 33 encapsulates the data packets with its care of address and route information, and transmits them to the HA 32. The HA 32 decapsulates the data packets. The header is removed at the HA 32. The HA 32 transmits the data packets to the CN 30.

The flow filter rules are for distribution of traffic among data flows by specifying binding of flow to care of address of an interface of the MN 33.

The home router (HR) 26, the foreign router (FR1) 27, and the foreign router (FR2) 28, as provided here, receive data packets, determine the next destination of the data packets, and forward the data packets to its next destination.

The FMEF entity 21 receives current binding information from the HA 32 and provides a flow decision maker with this information. The flow decision maker later updates the FMEF entity 21 with flow management decisions. Then, the FMEF entity 21 identifies data flows to be associated with current binding based on these decisions, and later transmits flow management instructions to the HA 32.

In a generic sense, the FMEF entity 21 may be located next to the HA 32. A flow management signalling can exist between the MN 33 and the HA 32. The flow-management signalling forwards information regarding the MN 33 to the FMEF entity 21. This information assists the making of flow management decision and seeks to provide an "always best managed" network.

The HN 25, the FN1 23, and the FN2 24 are forms of a local area network (LAN).

The data packet can be in a form of an Internet Protocol packet. The MN 33 can be in a form of computing device such a portable computer or a personal digital assistant (PDA). The MN 33 can be attached to the HN 25.

The embodiment of FIG. 1 provides a means, in the form of the FMEF entity, for a network-controlled and a Monami6-based flow management. The network operator can provide the network with critical information about the network and mobile nodes, and thus enabling the network to provide efficient flow management. This is unlike a MN-controlled flow management, which has information about the MN and not about the network.

In a generic sense, the network 20 is a type of a data packet network.

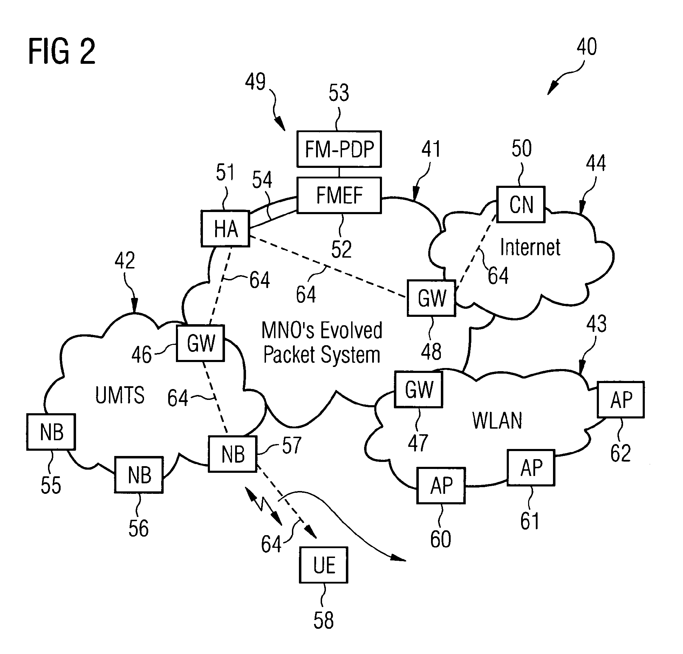

FIG. 2 shows a first improved 3GPP-based network 40 with an UE (user equipment) 58 attached at an UMTS access. The UTMS access is a form a 3GPP attachment. The 3GPP-based network 40 includes network parts that are similar to the network parts of the IETF-based network 20 of FIG. 1. The similar parts have same names. The description of FIG. 1 is incorporated by reference.

The improved 3GPP-based network 40 comprises an MNO's (Mobile Network Operator's) Evolved Packet System 41. The MNO's Evolved Packet System 41 is connected to an UMTS (Universal Mobile Telecommunications System) 42 via a serving gateway (GW) 46 and is connected to a WLAN (Wireless LAN) 43 via an ePDG (Evolved Packet Data gateway) 47 as well as to the Internet 44 via a Internet gateway (GW) 48.

The serving GW 46 and the ePDG 47 are shown in document D5.

The Internet 44 connects a correspondent node (CN) 50 to the Internet GW 48. The MNO's Evolved Packet System 41 comprises an improved home agent (HA) 51, which is connected to a flow management controller (FMC) 49 by a flow management signalling 54. The improved home agent (HA) 51 includes an interface for communication with the flow management controller (FMC) 49.

The improved home agent (HA) 51 is also connected to the Internet GW 48 and to the serving GW 46. The flow management controller (FMC) 49 includes a FM-PDP (Flow management-Policy Decision Point) entity 53 and a FMEF (Flow Management Enforcement Function) entity 52 that is connected to the FM-PDP entity 53.

The UMTS 42 includes a plurality of nodeB (NB) 55, 56, and 57. The nodeB 57 is connected to the serving GW 46 and to the UE 58 via a radio connection. The WLAN 43 comprises a plurality of access points (APs) 60, 61, and 62.

A multimedia traffic 64 comprising media flows is transmitted between the CN 50 and the UE 58. The multimedia traffic 64 is transmitted from the CN 50 to the Internet GW 48, to the improved HA 51, to the serving GW 46, to the NB 57, and to the UE 58. The multimedia traffic 64 includes flow of data packets.

The Evolved Packet System 41, as provided here, provides IP connectivity using non-3GPP access to an evolved 3GPP packet switched domain. An example of the non-3GPP access is a WLAN access. The Evolved Packet System 41 comprises parts that are described in document D5. The Evolved Packet System 41 includes a serving gateway and a PDN (packet data network) gateway. The PDN gateway is described in
3GPP TS 23.401, "GPRS Enhancements for E-UTRAN Access", http://www.3gpp.org/ftp/Specs/html-info/23401.htm,
herewith called document D10.

The improved HA 51 provides mobility and data flow support for Monami6 (mobile nodes with multiple interfaces in IPv6). The mobile node with multiple interfaces has a home address, which are bound to multiple care-of-addresses (CoA). Each care-of addresses (CoAs) is bound to one or more data flows. A description of binding of one care of address to one or more flows of data packets is shown in document D2 whilst a description of associating multiple care-of addresses to a single home address is disclosed in document D3.

The FM-PDP 53 utilizes information provided by the FMEF entity 52 and other network-based information to make the flow management decisions, which are later transmitted to the FMEF entity 52. The other network-based information can be located in a management information base (MIB). The other network-based information can include network interface characteristic, such speed of data transfer, and current network situation, such as current data-packet transmission volume.

The UE 58 includes at least one interface for transmitting and receiving the data flows. A signalling is provided between the UE 58 and the improved HA 51. The signalling is similar to the type for Mobile IP (MIP). The signalling is over a 3GPP interface, S2c, which is shown in document D5.

In a broad sense, the signalling between the UE 58 and the improved HA 51 can also be of the type provided for a Proxy MIP. A description of PMIP is shown in Gundavelli, Proxy Mobile IPv6, 2007. The signalling can over 3GPP interface S2a and S2b, which is described in document D5. The interfaces S2a, S2b and S2c are a form of the interface S2.

The UE 58 is a form of a mobile node (MN) and may include more than one interface for transmitting and receiving data flows.

The Flow Management-Policy Decision Point (FM-PDP) is a form a Policy Decision Point, which is a type of a flow decision maker. The FM-PDP 53 may be communicated to with a policy transmission messaging mechanism, such as RADIUS (Remote Authentication Dial In User Service), or COPS (Common Open Policy Service). A description of COPS is shown in document D7 whilst a description of RADIUS is disclosed in document D8.

In a generic sense, the 3GPP-based network 40 is a type of a data packet network. The serving GW 46, the ePDG 47, and the Internet GW 48 are forms of a gateway. The gateway can also be in the form of an enhanced gateway and a PDN gateway. The gateway can also be in the form of a serving GW that is integrated with a PDN gateway.

The embodiment shows the application of the flow management in the 3GPP environment.

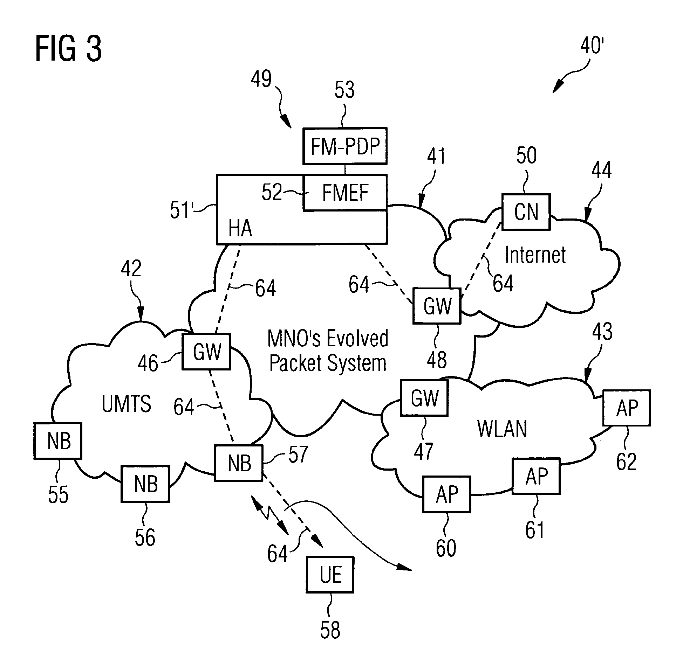

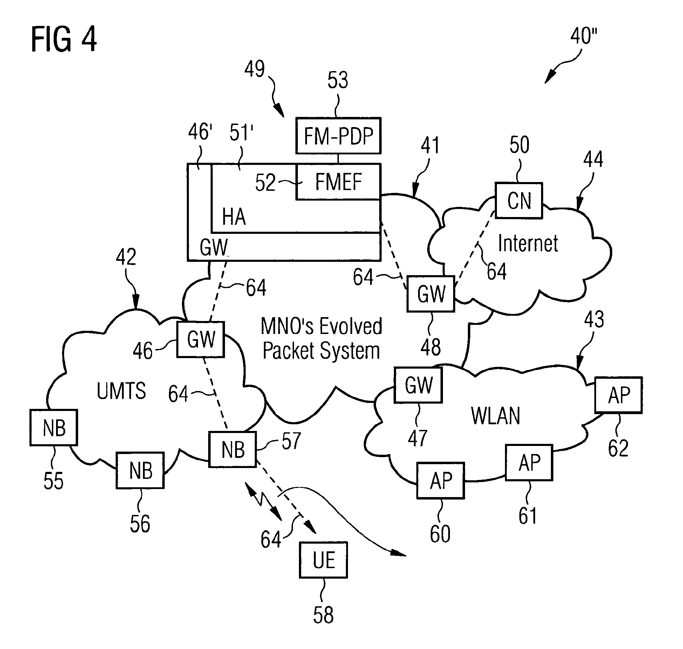

Other examples of the improved 3GPP-based network are possible. This is shown in FIGS. 3 and 4.

FIG. 3 shows a second improved 3GPP-based network 40'. The improved 3GPP-based network 40' has parts that are similar to the parts of FIG. 2. The similar parts have the same name and the same part number or the same number with a prime notation. The FIG. 2 description of the similar parts is incorporated by reference.

The improved 3GPP-based network 40' includes an MNO's Evolved Packet System 41, an UMTS 42, and a WLAN 43. The MNO's Evolved Packet System 41 is connected to the UMTS 42 via a serving gateway (GW) 46 and is connected to the WLAN 43 via an ePDG 47 as well as to the Internet 44 via a Internet gateway (GW) 48.

The MNO's Evolved Packet System 41 comprises an improved home agent (HA) 51'. The improved HA 51' includes an FMEF 52 that is integrated into the HA 51'. In other words, the HA 51' hosts the FMEF 52. The improved HA 51' is also connected to the Internet GW 48, to the serving GW 46, and to a FM-PDP (Flow management-Policy Decision Point) entity 53.

The Internet 44 connects a correspondent node (CN) 50 to the Internet GW 48. The UMTS 42 has a plurality of nodeBs (NBs) 55, 56, and 57. The nodeB 57 is connected to the serving GW 46 and to the UE 58. The WLAN 43 includes a plurality of access points (APs) 60, 61, and 62.

A multimedia traffic 64 including media flows is sent between the CN 50 and the UE 58. The multimedia traffic 64 is sent from the CN 50 to the Internet GW 48, to the improved HA 51', to the serving GW 46, to the NB 57, and to the UE 58.

FIG. 3 depicts an example wherein the FMEF 52 is incorporated in the HA 51'.

FIG. 4 illustrates a third improved 3GPP-based network 40". The improved 3GPP-based network 40" has parts that are similar to the parts of FIG. 3. The similar parts have the same name and same part number or same part number with a double prime notation. The FIG. 3 description of the similar parts is thus incorporated by reference.

The improved 3GPP-based network 40" comprises an MNO's Evolved Packet System 41, which is connected to a UMTS 42 via a serving gateway (GW) 46 and is connected to a WLAN 43 via an ePDG 47. The MNO's Evolved Packet System 41 is also connected to the Internet 44 via an Internet gateway (GW) 48.

The MNO's Evolved Packet System 41 comprises a PDN (packet data network) GW 46'. The PDN GW 46' is connected to the serving GW 46 and to a FM-PDP entity 53.

The PDN GW 46' includes an improved home agent (HA) 51', which is incorporated or integrated into the PDN GW 46'. In other words, the PDN GW 46' hosts the improved HA 51'. The improved HA 51' has an FMEF 52 that is integrated with the HA 51'.

The Internet 44 connects a correspondent node (CN) 50 to the Internet GW 48. The UMTS 42 has nodeBs (NBs) 55, 56, and 57 whilst the WLAN 43 includes access points (APs) 60, 61, and 62. The nodeB 57 is connected to the serving GW 46 and to the UE 58.

A multimedia traffic 64 is sent from the CN 50 to the Internet GW 48, to the PDN gateway 46', to the serving GW 46, to the NB 57, and to the UE 58.

FIG. 4 shows an example where the HA 51' is incorporated in the PDN GW 46'.

In a broad sense, the HA 51' can be incorporated into other gateway. The gateway can be in the form of a serving gateway, an enhanced gateway, a PDG gateway, or a PDN gateway. The enhanced gateway can be in the form of the Enhanced Gateway GPRS Support Node. The gateway can also be in the form of a serving gateway that is integrated with a PDN gateway.

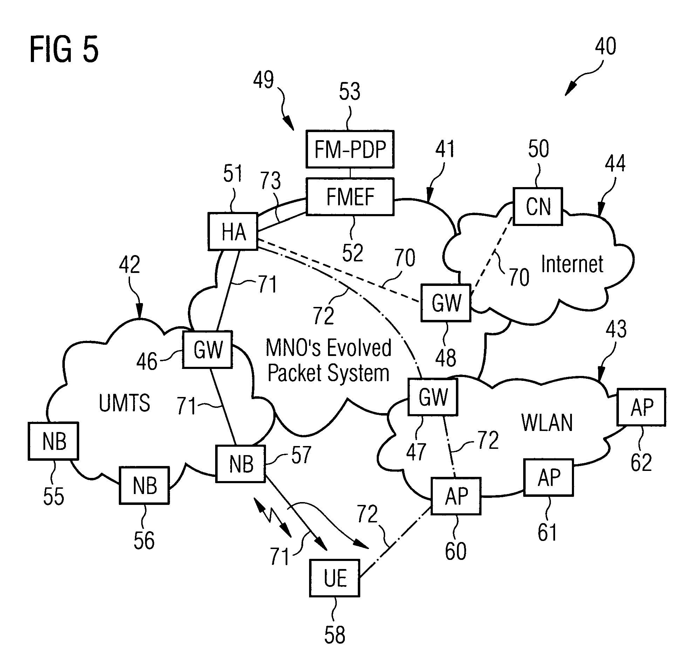

FIG. 5 shows the improved 3GPP-based network 40 of FIG. 2 with parallel attachments at the UMTS access and a WLAN access. The FIG. 5 includes parts that are similar with the parts of FIGS. 1 and 2. The similar parts are denoted with same name or with same part numeral.

The FIG. 5 shows the UE 58 with simultaneous accesses by an UTMS attachment at the nodeB (NB) 57 and by a WLAN attachment at the access point (AP) 60. The UTMS attachment is a type of 3GPP attachment whilst the WLAN attachment is a type of non-3GPP attachment.

A multimedia traffic 70 is transmitted from the correspondent node (CN) 50 to the user-equipment (UE) 58 via the UMTS access and the WLAN access. The multimedia traffic 70 comprises data packets.

In a downlink transfer, multimedia traffic 70 is transmitted from the CN 50 to the Internet GW 48, and to the improved HA 51. The improved HA 51 distributes the multimedia traffic 70 into a first media flow 71 and a second media flow 72.

The improved HA 51 sends the first media flow 71 and the second media flow 72 to the UE 58 via different paths. The improved HA 51 transmits the first media flow 71 to serving GW 46, to NB 57 and to the UE 58 whilst the improved HA 51 sends the second media 72 to the ePDG 47, to the AP 60 and to the UE 58.

Similarly, in an uplink transfer, the UE 58 send the first media 71 and the second media 72 via similar paths described above to the improved HA 51. The improved HA 51 combines the first media flow 71 and the second media flow 72 to form the multimedia traffic 70 and send the multimedia traffic 70 to the Internet GW 48 and to the CN 70.

The improved HA 51 is connected to the FMEF 52 via a flow management signalling 73. The UE 58 receives data flow from the first media flow 71 by a first interface and receives data flow from the second media flow 72 by a second interface. The improved HA 51 provides mobility and data flow support for the first and the second interfaces of the UE 58.

The embodiment shows the application wherein the flow management is applied in the context of simultaneous accesses from the 3GPP attachment and the non-3GPP attachment.

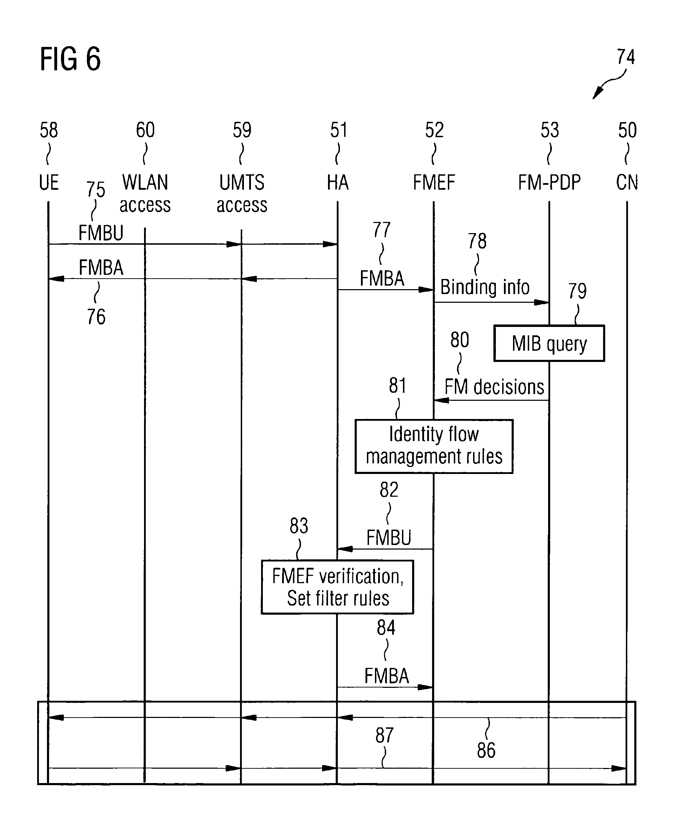

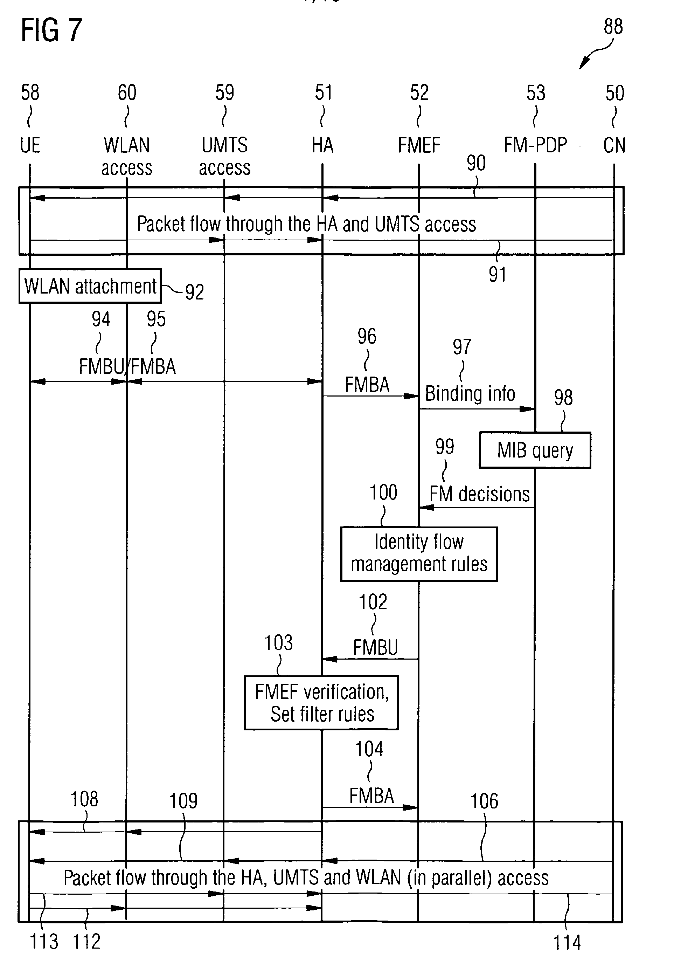

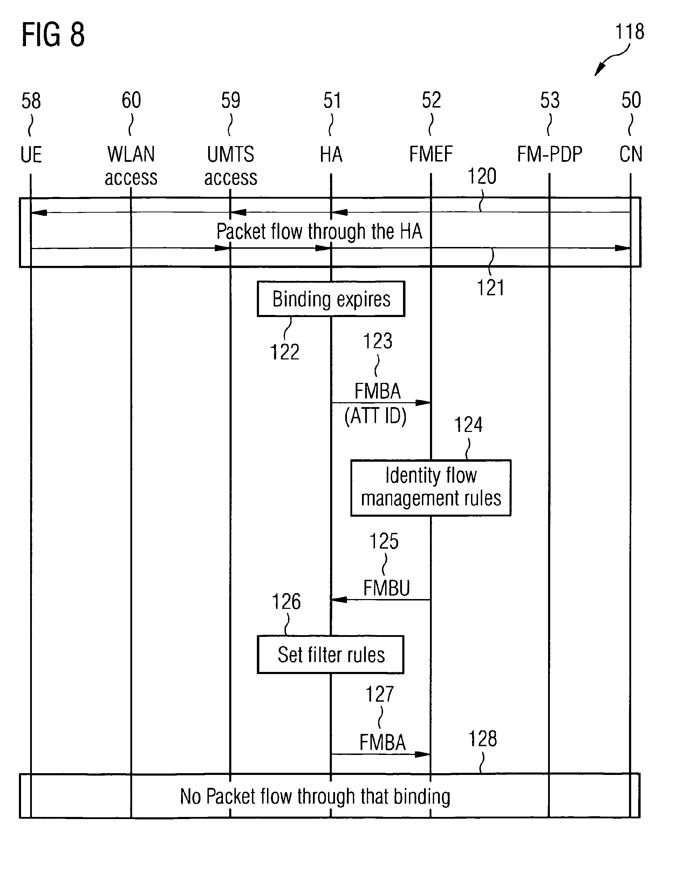

FIGS. 6 and 7 illustrate a flow management that is initiated by a user-equipment (UE) whilst FIG. 8 illustrates one of several potential flow management actions that is initiated by a network. The flow managements are controlled by the network through a flow management enforcement function (FMEF) with an interface to the improved home agent (HA).

FIG. 6 depicts a message flow 74 of a flow management (FM) initiated by the user-equipment (UE) 58 in the improved 3GPP-based network 40 of FIG. 2.

FIG. 6 shows network parts that are shown in FIG. 2. These network parts have the same part numeral or same name. The description of these parts is incorporated by reference.

The message flow 74 commences with a connection or attachment of a UMTS network interface of the UE 58 to the improved 3GPP-based network 40 at the UMTS access 59. The UMTS attachment is through the nodeB 57, as illustrated in FIG. 2.

The UE 58 registers its attachment and its network interface by transmitting a Flow Management Binding Update (FMBU) 75 message to the improved home agent (HA) 51 via the UTMS network interface. The FMBU is also called an improved Binding Update.

The FMBU 75 message includes a Binding Update (BU) message, an F flag field, and an extension. The BU message is described in document D1. The content of F flag field is set to indicate that the FMBU 75 message has the extension. The extension comprises a modified Binding Unique Identifier sub-option. The modified Binding Unique Identifier sub-option is shown in document D3 and it comprises an Access Technology Type (ATT) identifier (ID). The ATT ID has an "UMTS" identifier to indicate that the UE 58 is attached to the UTMS access.

The improved HA 51 then updates its binding cache with information from the FMBU 75 message, as described in documents D1 and D3. The improved HA 51 also reflects information from the ATT ID for a corresponding care-of-address of the UE 58.

The improved HA 51 later acknowledges the message from the UE 58 by transmitting a Flow Management Binding Acknowledgment (FMBA) 76 message to the UE 58. The FMBA 76 message comprises a Binding Acknowledgement (BA) that is described in document D1, an F flag field, and an extension that has a modified Binding Unique Identifier sub-option. The content of the F flag field is set to indicate that the FMBA 76 message has an extension. The modified Binding Unique Identifier sub-option is shown in document D3 and it includes an ATT ID. The FMBA is also known as an improved Binding Acknowledgment (BA).

The improved home agent (HA) 51 afterward sends a Flow Management Binding Acknowledgement (FMBA) 77 message to the FMEF 52, for informing the FMEF 52 about the registration of the UE 58 and its network interface. The FMBA 77 message includes an F flag field and an extension, the extension comprises a modified Binding Unique Identifier sub-option, which comprises an ATT ID. The content of the F flag field is set to indicate the FMBA 77 message has the extension.

The FMEF 52 afterward update its binding cache with the binding information and then consults the FM-PDP 53 to obtain decisions relating to handling of the data flows. The FMEF 52 also provides the FM-PDP 53 with current binding information 78 and the ATT ID.

The FM-PDP 53 utilizes information provided by the FMEF 52 and by other network-based information stored in the management information base (MIB), in step 79, to make flow management (FM) decisions 80 for different data flow traffic types. The other network-based information includes network interface characteristics and current network situation information, such as congestion.

The FM-PDP 53 later sends the FM decisions 80 to the FMEF 52, in step 81. The FMEF 52 then identifies flow management rules, in step 81, based on the FM decisions 80.

The FMEF 52 then sent an FMBU 82 message to the improved HA 51. The FMBU 82 message includes F flag field and an extension. The extension has flow management rules as defined by protocol extensions described in document D2. The protocol extensions support binding of data flow or data flows to a care of address. The content of the F flag field is set to indicate that the FMBU 82 message has the extension.

The improved HA 51 later performs a verification of information from the FMEF 52 and set filter rules, as described in document D8, in step 83.

The improved HA 51 then replies with a Flow Management Flow Acknowledgement (FMBA) 84 message to acknowledge the application status of the filter rules setting action. The FMBA 84 message includes an F flag field and an extension. This extension includes a Binding Unique Identifier sub-option. The content of the F flag field is set to denote the FMBA 84 message has the extension. The application status of the filter rules setting action is expressed as a success or a failure and is depicted in the status field of the flow identification option, which is described in document D2.

If the filter rules setting are successful, the improved HA 51 manages a data flow 86 from the CN 50 to the UE 58 and a data flow 87 from the UE 58 to the CN 50. The management is based on received filter rules.

In another embodiment, a sequence of actions, which are similar to the above sequence of actions, applies for a case of a user equipment (UE) or a mobile node (MN) de-registering binding with an improved home agent (HA).

In a generic sense, the flow management rule is a type of flow management instruction.

In a special case, the HA 51 performs the step of transmitting the FMBA 76 message to the UE 58 after the step of sending the FMBA 84.

FIG. 7 shows a message flow 88 of a flow management (FM) for parallel attachments that is initiated by the user-equipment (UE) 58 in the improved 3GPP-based network 40 of FIG. 5. The FM is controlled by the network through the FMEF entity 52 via its interface to the improved home agent (HA) 51.

FIG. 7 depicts network parts that are shown in FIG. 5. These network parts have the same part numeral or the same name. The description of these network parts is incorporated by reference. The message flow 88 also includes messages that are described in FIG. 6 description. The similar messages have the same names. The description of FIG. 6 is also incorporated by reference.

The UE 58 is firstly attached to the UTMS (Universal Mobile Telecommunications System) 42 at the UTMS access 60. The UTMS attachment is through an UTMS network interface of the UE 58.

A data flow 90 is transmitted, in a downlink transfer, from the correspondent node (CN) 50 to the improved home agent (HA) 51, to the UTMS access 59, and to the UE 58. In an uplink transfer, a data flow 91 is sent from the UE 58 to the UTMS access 59, to the improved HA 51, and to the CN 50. The data flows 90 and 91 transit through the UTMS access 59.

Then, the UE 58 is attached to the WLAN (Wireless LAN) access 60 in step 92 whilst the UE 58 is simultaneously attached to the UTMS access 59. The WLAN access 60 is through the AP 60, as shown in FIG. 5. The WLAN attachment is through a WLAN network interface of the UE 58.

The UE 58 later initiates registration with the improved HA 51. The registration process is similar to the registration process shown in FIG. 6.

The registration starts with the UE 58 sending a Flow Management Binding Update (FMBU) 94 message to the improved HA 51 via the WLAN access 60. The FMBU 94 message comprises an F flag field and an extension. The content of the F flag field is set to indicate that the FMBU 94 message has an extension. The extension includes the modified Binding Unique Identifier sub-option, which comprises an Access Technology Type (ATT) identifier (ID).

Then, the improved HA 51 updates its binding cache with information from the FMBU 94 message. The improved HA 51 reflects information from the ATT ID for corresponding care of address of the UE 58.

The improved HA 51 later transmits a Flow Management Binding Acknowledgment (FMBA) 95 message to the UE 58, as a feedback to the registration, as initiated by the FMBU 94 message.

The FMBA 95 message includes an F flag field and an extension. The content of the F flag field is set to indicate that the FMBA 95 message has the extension. The extension has a modified Binding Unique Identifier sub-option, which includes an ATT ID.

The improved home agent (HA) 51 afterward sends a Flow Management Binding Acknowledgment (FMBA) 96 message to the FMEF 52, to inform the FMEF 52 about the WLAN attachment of the UE 58. The FMBA 96 message includes an F flag field and an extension. The content of the F flag field is set to indicate the FMBA 96 message has the extension. The extension includes a modified Binding Unique Identifier sub-option, which comprises an ATT ID.

The FMEF 52 afterward update its binding cache with the binding information and then consults with the FM-PDP 53 by sending the current binding information to the FM-PDP 53, in step 97. The current binding information includes the ATT ID that has a WLAN identifier to indicate that the UE 58 is attached at the WLAN access.

The FM-PDP 53 then makes flow management (FM) decisions 99 for different data flow traffic types using information provided by the FMEF 52 and by other network-based information, in step 98. The other network-based information is stored in the management information base (MIB).

The FM-PDP 53 later sends the FM decisions 99 to the FMEF 52, in step 80 for the FMEF 52 to identify flow management rules, in step 100.

The FMEF 52 then sent, to the improved HA 51, a Flow Management Binding Update (FMBU) 102 message that includes an F flag field and an extension. The content of the F flag field is set to indicate that the FMEF 52 has the extension. The extension comprises flow management instructions.

The improved HA 51 later performs a verification of information from the FMEF 52 and set filter rules, in step 103.

The improved home agent (HA) 51 then replies with a Flow Management Binding Acknowledgement (FMBA) 104 message to acknowledge the application status of the filter rules setting action. The FMBA 104 message includes an F flag field and an extension that comprises a Binding Unique Identifier sub-option. The content of the F flag is set to denote the FMBA 104 message has an extension.

If the application is successful, the improved HA 51 is equipped to apply the filter rules to distribute data flow into multiple flows with different paths.

Later, in a downlink transfer, the improved HA 51 receives a data flow 106 from the CN 50. The improved HA 51 then distributes the data flow 106 into data flows 108 and 109, according to the received filter rules. The data flow 108 is transmitted from the improved HA 51 to the UE 58 via the WLAN access 60 whilst the data flow 109 is transmitted from the improved HA 51 to the UE 58 via to the UTMS access 59.

In an uplink transfer, the improved HA 51 receives a data flow 113 from the UE 58 through the UTMS access 59 and a data flow 112 from the UE 58 through the WLAN access 60. Then, the improved HA 51 sends the data flows 112 and 113 to its destination, the CN 50.

FIG. 8 illustrates an example of several potential message flows for expiry of a binding at the improved home agent (HA) 51 in the improved 3GPP-based network 40 of FIG. 2 or 5.

A message flow 118 is depicted in FIG. 8. The message flow 118 has message sequence that is similar to e message sequence of message flow 74 of FIG. 6 or the message flow 88 of FIG. 7. The message flow 118 has messages that are similar to the messages in FIG. 6 or 7. The similar message has same names. The description of these messages is thus incorporated by reference. The FIG. 8 also has network parts that are shown in FIG. 2 or 5. The description of these network parts are similarly incorporated by reference.

The message flow 118 commences with data packet flows between the CN (correspondent node) 50 and the UE (user equipment) 58. The data packet flows transit through the improved home agent (HA) 51 and the UMTS access 59.

In a downlink transfer, a data packet flow 120 is transmitted from the CN 50 to the improved HA 51, to the UTMS access 59, and to the UE 58. In an uplink transfer, a data flow 121 is sent from the UE 58 to the UMTS access 59, to the improved HA 51, and to the CN 50.

Later, lifetime of a binding of the flow 120 or 121 expires at the improved HA 51, in step 122, as shown in FIG. 8. The improved HA 51 then informs the FMEF entity 52 of the expiry by sending a Flow Management Binding Acknowledgement (FMBA) 123 message that includes an ATT ID to the FMEF entity 52. The FMBA 123 message is to inform the FMEF entity 52 about the expired binding.

The FMEF entity 52 later identities flow management rules governing how the flows are handled, in step 124 and then sends a FMBU 125 message with flow management instructions to the improved HA 51.

The improved HA 51 afterward set filter rules based on received flow management instructions from the FMBU 125, in step 126. Later, the improved HA 51 replies to the FMEF 52, by sending a Flow Management Binding Acknowledgement (FMBA) 127 message to the FMEF 52. The FMBA 127 message acknowledges the application status of the filter rules, as initiated by the flow management instructions.

Afterwards, with successful application of the filter rules, no data packet flows through the expired binding, as shown in step 128.

In a generic sense, the flow management is network initiated, as shown in FIG. 8, and can be trigger by events other than binding expiry, such as network congestion of access system or access shutdown due to maintenance.

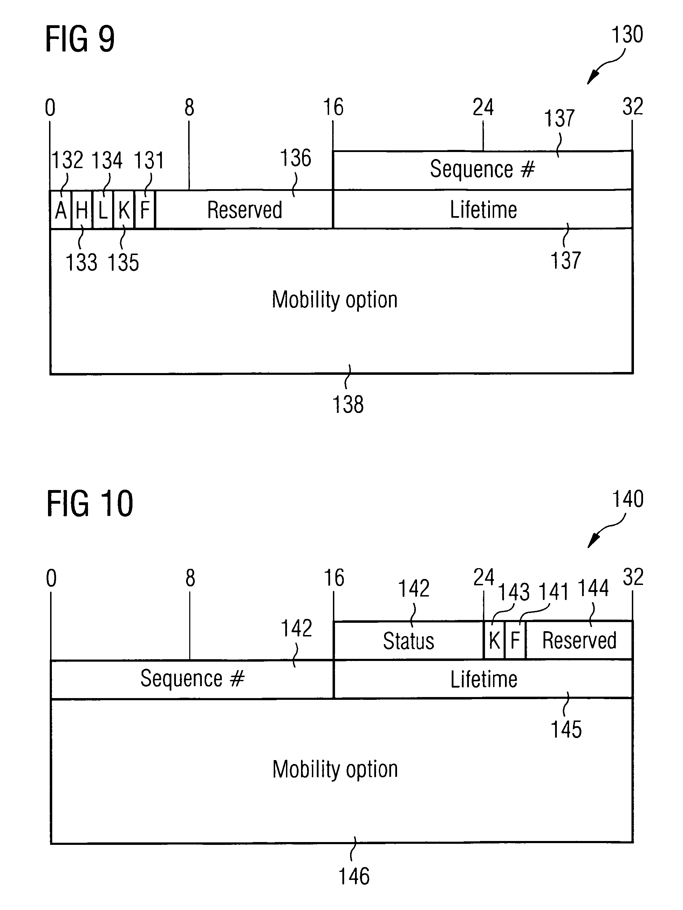

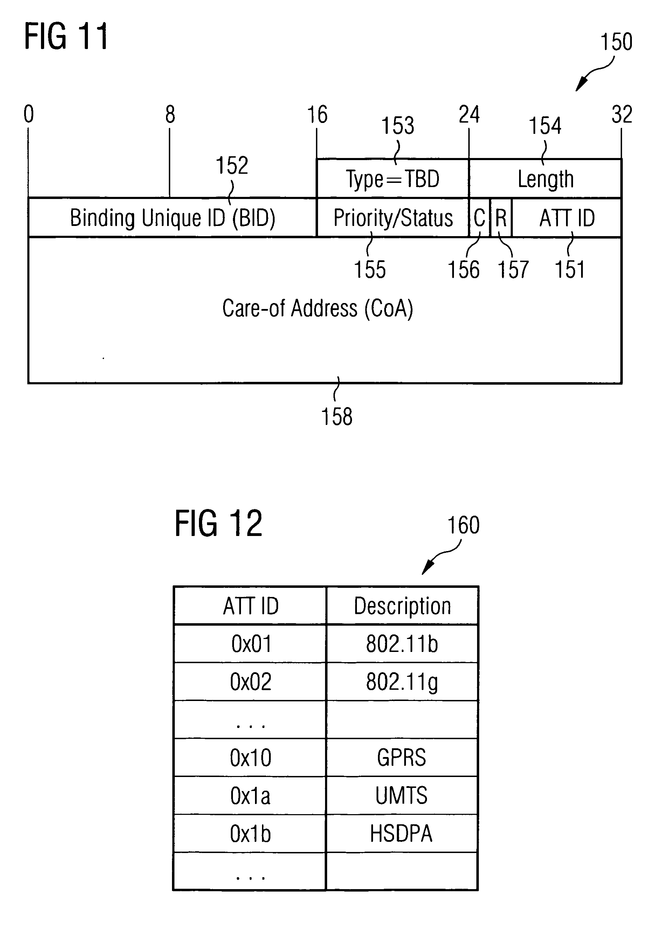

The Flow Management Binding Update (FMBU) message is shown in FIG. 9. The FMBU message also additionally carries FM rules that are described in document D2, or a modified Binding Unique Identifier sub option with ATT ID that is described in document D3 and illustrated in FIG. 11.

FIG. 9 illustrates a format of a Flow Management Binding Update (FMBU) 130 message. The FMBU 130 message is depicted in FIGS. 6, 7 and 8.

As depicted in FIG. 9, the FMBU 130 message comprises an F flag field 131 and other fields 132 to 138. The several other fields 132 to 138 are described in document D1.

The other fields 132 to 138 include a K field 135 and a reserved field 136. The F flag field 131 is one bit wide and is placed between a K field 135 and a reserved field 136.

If the F flag field 131 is set, it indicates that the FMBU message 130 includes a modification or extension and it is for sending by an FMEF entity, a mobile node (MN), or user equipment (UE) to an improved home agent (HA). The extension comprises a FM (flow management) rules or a modified Binding Unique Identifier sub option.

FIG. 10 illustrates a format of a Flow Management Binding Acknowledgement (FMBA) 140 message. The FMBA 140 message is depicted in FIGS. 6, 7, and 8. The FMBA 140 message includes an F flag field 141 and other fields 142 to 146, as shown in FIG. 10. The other fields are described in document D1.

The other fields 142 to 146 include a K field 143 and a reserved field 144. The F flag field 141 is 1 bit wide.

If a content of the F flag field 141 is set, it indicates that the FMBA 140 message includes an extension, and that the FMBA 140 message is for sending, by an improved home agent (HA), to an FMEF entity, to a mobile node (MN), or to user equipment (UE).

The FMBA 140 message may be for sending in the event that the MN or the UE establishes or registers a binding, the binding expires, or as a response to a filter setting action. The response can depict a success or failure status.

FIG. 10 illustrates a modified Binding Unique Identifier sub-option 150, which is included in the FMBA message of FIG. 10. The modified Binding Unique Identifier sub-option 150 includes an ATT ID field 151 and other fields 152 to 158, as shown in FIG. 11. The other fields 152 to 158 are described in document D3.

The ATT ID field 151, as provided here, is placed after the R field 157 and is of six bits wide. The content ATT ID field 151 indicates a type of access technology of a network interface for which a network interface is attached to the network 20 of FIG. 1 or the network 40 of FIG. 2 or 5. An example of codes of ATT ID is shown a table 160 in FIG. 12.

In other words, the above-mentioned embodiments show 3GPP network extensions for the network-controlled Monami6-based flow management. The 3GPP network extension comprises extension for the interface S2, extension for an improved home agent (HA), and a description for an FMEF entity.

The interface S2 extension supports an improved Binding Update (BU) and an improved Binding Acknowledgement (BA). The improved BU is also called Flow Management Binding Update (FMBU) and the improved BA is known as Flow management Binding Acknowledgement (FMBA).

The PDN (packet data network) gateway (GW) includes an extension that supports the home agent extension and the FMEF entity, if the PDN GW hosts the improved HA and the FMEF entity.

The PDN GW extension includes support for the extended interface S2, for the policy decision point, such as a flow management-policy decision point (FM-PDP), and for flow management rules identification and settings according to received flow management decisions. The flow management decisions may originate from the policy decision point (PDP).

The FMEF entity performs the steps of monitoring for an improved Binding Acknowledgement (BA) message that indicates an establishment of a binding or deregistration of a binding of user equipment (UE) or of a mobile node (MN) at the improved HA. The improved HA may maintain or update its binding cache with the binding information from the improved BU message.

Later, the FMEF entity provides the policy decision point with the binding information and obtains flow management decisions from the policy decision point. Communication between the FMEF entity and the policy decision point may be through a policy transmission messaging mechanism, such as the RADIUS (Remote Authentication Dial In User Service) or the COPS (Common Open Policy Service).

The FMEF entity then identifies the flow to be associated with the current active bindings, as based on the flow management decisions. The FMEF entity afterward generates an improved Binding Update (BU) for attaching filter rules, and sends the filter rules to the improved home agent (HA). The document D9 describes the filter rules. Later, the FMEF entity waits for an acknowledgement of the binding via an improved Binding Acknowledgement (BA) messages.

The improved home agent (HA) that is enabled with the network based Monami6 extensions receives an improved Binding Update (BU) from a mobile node (MN) or a user equipment (UE) and processes the improved Binding Update (BU), as described in documents D1 and D3. Later, the improved home agent (HA) sends an improved Binding Acknowledgement (BA) to a FMEF entity.

The improved home agent (HA) afterward receives an improved Binding Update (BU) from the FMEF entity. The improved Binding Update (BU) carries information for setting flow filtering rules for the improved home agent (HA). Then, the improved home agent (HA) sends an improved Binding Acknowledgement (BA) to indicate success status or failure status of the filter setting. The improved home agent (HA) later sends an improved Binding Acknowledgement (BA) to the FMEF entity in the case that the binding expires.

List of abbreviations
- 3GPP: 3rd Generation Partnership Project
- ATT: Access Technology Type
- AP: access point
- ATT: Access Technology Type
- BA: Binding Acknowledgement
- BU: Binding Update
- BID: Binding Unique Identifier
- CN: Correspondent Node
- COPS: Common Open Policy Service
- ePDG: Evolved Packet Data gateway
- FM: Flow Management
- FMBA: (improved) Flow management Binding Acknowledgement
- FMBU: (improved) Flow management Binding Update
- FMEF: Flow Management Enforcement Function
- FN: Foreign Network
- FR: Foreign Router
- GW: Gateway
- HA: improved Home Agent
- HN: Home Network
- HoA: Home Address
- HR: Home Router
- ID: Identifier
- IETF: Internet Engineering Task Force
- IPv4: Internet Protocol version 4
- IPv6: Internet Protocol version 6
- LAN: Local Area Network
- MIB: Management Information Base
- MIPv6: Mobile Internet Protocol version 6
- MN: Mobile Node
- MNO: Mobile Network Operator
- Monami6: Mobile Nodes and Multiple Interfaces in IPv6
- NB: nodeB
- NEMO: Network Mobility
- PDN: packet data network
- PDP: Policy Decision Point
- RADIUS: Remote Authentication Dial In User Service
- UE: User Equipment
- UMTS: Universal Mobile Telecommunications System
- WLAN: Wireless Local Area Network

### List of reference documents

- D0:: S. Deering and R. Hinden, "Internet Protocol, Version 6 (IPv6) Specification", RFC 2460, December 1998, http://www.ietf.org/rfc/rfc2460.txt
- D1:: D. Johnson, C. Perkins, and J. Arkko, Mobility Support in IPv6, RFC 3775, June 2004, http://www.ietf.org/rfc/rfc3775.txt
- D2:: H. Soliman, N. Montavont, N. Fikouras, and K. Kuladinithi, "Flow Bindings in Mobile IPv6", draft-soliman-monami6-flow-binding-00.txt, February 2007, http://tools.ietf.org/id/draft-soliman-monami6-flow-binding-04.txt
- D3:: R. Wakikawa, T. Ernst, K. Nagami, and V. Devarapalli, "Multiple Care-of Addresses Registration", draft-ietf-monami6-multiplecoa-02.txt, March 2007,
http://tools.ietf.org/html/draft-ietf-monami6-multiplecoa-02
- D4:: 3GPP TR 23.882, "3GPP system architecture evolution", http://www.3gpp.org/ftp/Specs/html-info/23882.htm
- D5:: 3GPP TS 23.402, "Architecture Enhancements for non-3GPP accesses", http://www.3gpp.org/ftp/Specs/html-info/23402.htm
- D6:: 3GPP TS 23.234, "3GPP system to Wireless Local Area Network (WLAN) inter-working", http://www.3gpp.org/ftp/Specs/html-info/23234.htm
- D7:: J. Boyle, R. Cohen, S. Herzog, R. Rajan, and A. Sastry, "The COPS (Common Open Policy Service) Protocol", January 2000, http://tools.ietf.org/html/rfc2748
- D8:: C. Rigney, S. Willens, A. Rubens, and W. Simpson, June 2000, "Remote Authentication Dial In User Service (RADIUS)", http://tools.ietf.org/html/rfc2865
- D9:: C. Larsson, H. Levkowetz, H. Mahkonen, T. Kauppin, October 2006, "A Filter Rule Mechanism for Multi-access Mobile Ipv6", http://tools.ietf.org/wg/monami6/draft-mitsuya-monami6-flow-distribution-policy-04.txt
- D10:: TS 23.401, "GPRS Enhancements for E-UTRAN Access", http://www.3gpp.org/ftp/Specs/html-info/23401.htm

### Reference numbers

- 20: IETF based network
- 21: flow management enforcement function (FMEF) entity
- 22: Internet
- 23: foreign network (FN1)
- 24: foreign network (FN2)
- 25: home network (HN)
- 26: home router (HR)
- 27: foreign router (FR1)
- 28: foreign router (FR2)
- 30: correspondent node (CN)
- 32: improved home agent (HA)
- 33: mobile node (MN)
- 35: combine flow
- 37: tunnelled first flow
- 38: tunnelled second flow
- 39: flow management signalling
- 40: 3GPP based network
- 40': 3GPP based network
- 40": 3GPP based network
- 41: MNO's Evolved Packet System
- 42: UMTS (Universal Mobile Telecommunications System)
- 43: WLAN (Wireless LAN)
- 44: Internet
- 46: serving gateway (GW)
- 46': PDN gateway (GW)
- 47: Evolved Packet Data gateway (ePDG)
- 48: Internet gateway (GW)
- 49: flow management controller (FMC)
- 50: correspondent node (CN)
- 51: improved home agent (HA)
- 51': improved home agent (HA)
- 52: flow management enforcement function (FMEF) entity
- 53: FM PDP (Flow management Policy Decision Point) entity
- 54: flow management signalling
- 55: nodeB (NB)
- 56: nodeB (NB)
- 57: nodeB (NB)
- 58: user equipment (UE)
- 59: UTMS access
- 60: access point (AP)
- 61: access point (AP)
- 62: access point (AP)
- 65: multimedia traffic
- 70: multimedia traffic
- 71: first media flow
- 72: second media flow
- 73: flow management signalling
- 75: Flow Management Binding Update (FMBU)
- 76: Flow Management Binding Acknowledgement (FMBA) message
- 77: Flow Management Binding Acknowledgment (FMBA) message
- 78: step
- 79: step
- 80: flow management (FM) decisions
- 81: step
- 82: Binding Update (FMBU) message
- 83: step
- 84: Flow Management Binding Acknowledgement (FMBA)
- 86: data flow
- 87: data flow
- 88: message flow
- 90: data flow
- 91: data flow
- 92: step
- 94: Flow Management Binding Update (FMBU)
- 95: Flow Management Binding Acknowledgment (FMBA)
- 96: Flow Management Binding Acknowledgment (FMBA)
- 97: step
- 98: step
- 99: flow management (FM) decisions
- 100: step
- 102: Flow Management Binding Update (FMBU)
- 103: step
- 104: Flow Management Binding Acknowledgement (FMBA)
- 106: data flow
- 108: data flow
- 109: data flow
- 112: data flow
- 113: data flow
- 114: data flow
- 118: message flow
- 120: data flow
- 118: message flow
- 120: data flow
- 121: data flow
- 122: step
- 123: Flow Management Binding Acknowledgement (FMBA)
- 124: step
- 125: Flow Management Binding Update (FMBU)
- 126: step
- 127: Flow Management Binding Acknowledgement (FMBA)
- 128: step
- 130: Flow Management Binding Update (FMBU) message
- 131: F flag field
- 132: other field
- 133: other field
- 134: other field
- 135: other field
- 136: other field
- 137: other field
- 138: other field
- 140: Flow Management Binding Acknowledgement (FMBA) message
- 141: F field
- 142: other field
- 143: other field
- 144: other field
- 145: other field
- 146: other field
- 150: modified Binding Unique Identifier sub-option
- 151: ATT ID field
- 152: other field
- 153: other field
- 154: other field
- 155: other field
- 156: other field
- 157: other field
- 158: other field
- 160: table

## Claims

1. A method for flow management in a data packet network (40) with a mobile node (MN) (33; 58), the MN (33; 58) comprises at least one network interface, the method comprises the steps of
- sending an improved Binding Update (BU) (82; 102) message to an improved home agent (HA) (51) by a FMEF (Flow Management Enforcement Function) (52) entity, the improved BU (82; 102) message comprises at least one flow management instruction, and
- deriving flow filters from the at least one flow management instruction by the improved HA (51).

2. The method of claim 1,
**characterised in that**
the improved BU (82; 102) message further comprises a F flag field,
a content of the F flag field indicates that the improved BU message (82; 102) comprises the at least one flow management instruction.

3. The method of claim 1 or 2, comprises the further step of sending an improved BU message (75; 94) to the improved HA (51) by the MN (33; 58),
the improved BU message (75; 94) is to register the attachment of the MN (33; 58) and the least one network interface to the data packet network (40), the improved BU message (75; 94) comprises a modified Binding Unique Identifier sub-option (150), which comprises an Access Technology Type (ATT) Identifier (ID) field (151).

4. The method of claim 3, comprises the further step of updating a binding cache of the improved HA (51) by the improved HA (51),
the update reflects a content of the ATT ID field (151) in a corresponding care of address.

5. The method of claim 4, comprises the further step of sending an improved Binding Acknowledgement (BA) (76; 95) message to the MN (33; 58) by the improved HA (51).

6. The method of claim 5, comprises the further step of sending an improved BA (77; 104) message to the FMEF (52) by the improved HA (51),
the improved BA (77; 104) message is to inform the FMEF (52) about the registration of the MN (33; 58) and the at least one network interface, the improved BA (77; 104) message comprises a 'F' flag field and a modified Binding Unique Identifier sub-option (150) with an ATT ID field (151), a content of the F flag field indicates that the improved BA (77; 104) message comprises the modified Binding Unique Identifier sub-option (150).

7. The method of claim 6, comprises the further step of replying with an improved BA (84; 104) message to acknowledge an application status of the flow management instruction setting action by the improved HA (51),
the application status is shown in a status field of the improved BA (84; 104) message, the improved BA (84; 104) message comprises the 'F' flag field that is set and the modified Binding Unique Identifier sub-option (150), a content of the F flag field indicates that the improved BA (84; 104) message comprises the modified Binding Unique Identifier sub-option (150).

8. A data packet network (40) with mobile nodes (MN) (33; 58), which are attached to the data packet network (40), the MN (33; 58) comprises at least one network interface, the data packet network (40) comprises a FMEF (Flow Management Enforcement Function) (52) entity, the FMEF (52) entity is connected to an improved home agent (HA) (51) by a communication link, the tasks performed by the FMEF (52) entity comprises
- obtaining at least one flow management decision from a flow decision maker (53),
- identifying flows to be associated with current binding based on the at least one flow management decision, and
- informing the improved HA (51) regarding at least one flow management instruction.

9. The data packet network (40) of claim 8,
**characterised in that**
an improved Binding Update (BU) (82; 102) message from the FMEF (52) to the improved HA (51) comprises the at least one flow management instruction.

10. The data packet network (40) of claim 8 or 9,
**characterised in that**
the task performed by the FMEF (52) entity further comprises waiting for an improved Binding Acknowledgement (BA) (77; 96; 123) message, which indicates an establishment of a binding or of a deregistration of the binding of the MN (33; 58) at the improved HA (51).

11. The data packet network (40) of claim 10,
**characterised in that**
the task performed by the FMEF (52) entity further comprises updating a binding cache with new binding.

12. The data packet network (40) of claim 11,
**characterised in that**
the task performed by the FMEF (52) entity further comprises sending a binding information (78; 97) to the flow decision maker (53).

13. The data packet network (40) of claim 12,
**characterised in that**
the task performed by the FMEF (52) entity further comprises waiting for an improved BA (77, 84; 96, 104) message.

14. A data packet network (40) with mobile nodes (MN) (33; 58), which are attached to the data packet network (40), the MN (33; 58) comprises at least one network interface, the data packet network (40) comprises
an improved home agent (HA) (51),
the improved HA (51) is connected to a FMEF (Flow Management Enforcement Function) (52) entity by a communication link (54; 73), the tasks performed by the improved HA (51) comprises
- receiving an improved Binding Update (BU) (82; 102) message from the FMEF (52) entity, which carries at least one flow management instruction, and
- deriving at least one flow filtering rule from the at least one flow management instruction.

15. The data packet network (40) of claim 14,
**characterised in that**
the task performed by the improved HA (51) further comprises receiving an improved BU (75; 94) message from the MN (33; 58) to register an attachment of the MN (33; 58) to the data packet network (40).

16. The data packet network (40) of claim 15,
**characterised in that**
the task performed by the improved HA (51) further comprises sending an improved BA (Binding Acknowledgement) (76; 95) message to the MN (33; 58) to acknowledge receipt of the improved BU (75; 94) message.

17. The data packet network (40) of claim 16,
**characterised in that**
the task performed by the improved HA (51) further comprises sending an improved BA (77; 96) message to the FMEF (52) entity, to inform the FMEF (52) entity of the attachment of the MN (33; 58) and the network interface to the data packet network (40).

18. The data packet network (40) of claim 14,
**characterised in that**
the task performed by the improved HA (51) further comprises sending an improved BA (84; 104) message to indicate a success status or a failure status of the setting of the at least one flow filtering rule.

19. The data packet network (40) of claim 14,
**characterised in that**
the task performed by the improved HA (51) further comprises sending an improved BA (123) message to the FMEF (52) entity.

20. The data packet network (40) of one of the claims 14 to 19
**characterised in that**
the MN (33; 58) communicate with the improved HA (51) through an interface if the improved HA (51) is hosted by a GW (gateway).

21. The data packet network (40) of claim 20
**characterised in that**
the GW comprises a PDN (packet data network) gateway (46') and the interface comprises an interface S2.

22. A data packet network (40) with mobile nodes (MNs) (33; 58), which are attached to the data packet network (40), the MN (33; 58) comprises at least one network interface, the data packet network (40) comprises a GW (gateway),
the GW comprises a FMEF (Flow Management Enforcement Function) (52) entity and an improved home agent (HA) (51), the FMEF (52) entity is connected to the improved HA (51) by a communication link (54; 73), the tasks performed by the FMEF (52) entity comprises
- obtaining at least one flow management decision from a flow decision maker (53),
- identifying flows to be associated with current binding based on the at least one flow management decision, and
- informing the improved HA (51) regarding at least one flow management instruction.

23. The data packet network (40) of claim 22,
**characterised in that**
the GW comprises a PDN (packet data network) GW (46'), which is in communication link with the MN (33; 58) through an interface S2.

24. The data packet network (40) of claim 23,
**characterised in that**
the GW is in communication link with the flow decision maker (53).

25. The data packet network (40) of claim 23 or 24,
**characterised in that**
the GW derives at least one flow filter rule from at least one flow management rule, which is received from the flow decision maker (53).

26. The data packet network (40) of claim 25,
**characterised in that**
the GW can be in the form of a serving GW (46), an ePDG (Evolved Packet Data gateway) (47), an Internet GW (48), an enhanced GW (46), the PDN gateway (46'), or the serving GW that is integrated with the PDN gateway.
